# EUROPÄISCHE PATENTANMELDUNG

(11) **EP 3 716 568 A1**
(43) Veröffentlichungstag der Anmeldung: **30.09.2020**
(21) Anmeldenummer: 19165804.6
(22) Anmeldetag: 28.03.2019
(51) Int. Cl.: H04L 29/06, H04W 12/06, H04W 4/70, H04W 12/00

(54) **FUNKTIONAL-SICHERE VERBINDUNGSIDENTIFIZIERUNG FÜR EINE M2M KOMMUNIKATION**

(71) Anmelder: Siemens Aktiengesellschaft, 80333 München (DE)
(72) Erfinder: Barthel, Herbert, 91074 Herzogenaurach (DE); Meyer, Thomas Markus, 90475 Nürnberg (DE); Walter, Maximilian, 90408 Nürnberg (DE)

(57) **Zusammenfassung**

Um einem zweiseitigen Datenaustausch von sicherheitsgerichteten Daten (F_{B}-Data, F_{A}-Data) zwischen zwei Kommunikationsteilnehmern (A,B) Daten funktional sicher zu übertragen wird vorgeschlagen, eine Abbildung zu definieren, die einer Consumer-ID jeder bidirektionalen Verbindung einer Provider-ID desselben Endpunktes zuordnet, und diese Abbildung den beiden Endpunkten a priori bekannt zu machen. Beispielsweise könnte diese Abbildung aus dem Einerkomplement oder alternativ aus dem Zweierkomplement bestehen. Die Verbindung zwischen dem Datenanbieter und den Datenverbraucher wird dabei aufgebaut wie oben beschrieben. Der Datenverbraucher erhält die Adresskennung vom Datenanbieter beispielsweise über einen zusätzlichen Seitenkanal. Nach dem Verbindungsaufbau kann die Kennung vom Datenanbieter sicher geprüft werden.

## Beschreibung

Die Erfindung betrifft ein Verfahren zur funktional sicheren Verbindungsidentifizierung bei einem zweitseitigen Datenaustausch von sicherheitsgerichteten Daten zwischen zwei Kommunikationsteilnehmern in einem Kommunikationssystem, wobei in einem ersten Kommunikationsteilnehmer ein erster Datenverbraucher mit einer ersten Adresskennung und ein erster Datenanbieter betrieben wird, in einem zweiten Kommunikationsteilnehmer ein zweiter Datenanbieter mit einer dritten Adresskennung betrieben wird und zusätzlich ein zweiter Datenverbraucher betrieben wird und zwischen dem ersten Datenverbraucher und dem zweiten Datenanbieter eine erste unidirektionale Verbindung aufgebaut wird und zwischen dem ersten Datenanbieter und dem zweiten Datenverbraucher eine zweite unidirektionale Verbindung aufgebaut wird.

Eine funktional sichere Kommunikation und Verbindungsidentifizierung wird beispielsweise mittels PROFIsafe realisiert.

Die Systembeschreibung "PROFIsafe Systembeschreibung, Technologie und Anwendung", Version April 2016, Bestell-Nr. 4.341, Herausgeber PROFIBUS Nutzerorganisation e.V. (PNO) beschreibt die Realisierung einer sicherheitsgerichteten Kommunikation und insbesondere einer sicheren Verbindungsidentifizierung bei PROFIBUS und PROFINet Protokollen.

Auch das Handbuch "SIMATIC, Industrie Software S7 F/FH Systems - Projektieren und Programmieren", Ausgabe 05/2009, A5E00048979-06 beschreibt eine sicherheitsgerichtete Kommunikation, insbesondere bei SIMATIC Steuerungen.

All den genannten und aufgezeigten bekannten Verfahren zur sicherheitsgerichteten Kommunikation, insbesondere in der Automatisierungstechnik, ist gemeinsam, dass die Adressbeziehung, umfassend Ziel- und Quelladresse, beispielsweise von PROFIsafe-Teilnehmern auf PROFIBUS oder PROFINet, fest projektiert ist.

Als Beispiel sei das Sicherheitsprotokoll PROFIsafe genannt. Bei PROFIsafe wird ein 32 Bit Codename, welcher einer Adressbeziehung entspricht, zur eindeutigen Verbindungsidentifizierung genutzt.

Bei der funktional sicheren Kommunikation beispielsweise bei PROFIsafe muss garantiert werden, dass eine Restfehlerwahrscheinlichkeit pro Zeiteinheit hinreichend klein ist. Betrachtet werden Verletzungen der Datenintegrität (Datenintegrität wird durch eine Signatur - z.B. CRC - überprüft), einer Authentizität (Authentizität wird durch einen Vergleich mit einer Quell- und Zieladresse oder mit einem Codenamen überprüft) und einer Timelines (Timelines bedeutet: Telegrammdaten dürfen nur verwendet werden, wenn sie in der richtigen Reihenfolge und rechtzeitig empfangen werden).

Insbesondere bei einer Kommunikation in neueren Industrieanlagen soll es möglich werden, dass Kommunikationsbeziehungen häufig und schnell wechseln können, d.h. ein Kommunikationsteilnehmer benötigt zu einem Zeitpunkt Informationen von einem bestimmten anderen Kommunikationsteilnehmer und zu einem anderen Zeitpunkt wiederum von einem anderen Kommunikationsteilnehmer. Beispiele hierzu sind rekonfigurierbare modulare Maschinen, fahrerlose Transportsysteme (AGV's), Werkzeugwechsler, Spannrahmen, Krankatzen usw..

Nach dem aufgezeigten Stand der Technik muss zwischen allen potentiellen Kommunikationspartnern jeweils eine funktionale sichere Kommunikationsverbindung fest programmiert und projektiert werden. Bei n-Teilnehmern sind dies bis zu n • (n - 1) Verbindungen, von denen zu einem Zeitpunkt jeweils nur ein sehr geringer Teil gleichzeitig aktiv ist. Für jede dieser Verbindungen muss aber ein eindeutiger Authentizitäts-Code (AA-Code bei Profisafe: Codename) vergeben werden, der dazu dient, Adressierungsfehler (d.h. Zustellung eines Kommunikationstelegramms an einen falschen Empfänger) sicher zu erkennen.

Bei dem genannten Stand der Technik funktionieren diese Verfahren allerdings nur für unidirektionale Verbindungen, es wird also davon ausgegangen, dass sicherheitsbezogene Daten nur von einem Gegenüber zu einem Initiator fließen, aber nicht in umgekehrte Richtung.

Es ist Aufgabe der Erfindung eine verfahrenstechnische Lösung bzw. eine Anordnung bereitzustellen, bei welchen ein Datenaustausch mit sicherheitsgerichteten Daten auch für bidirektionale Verbindungen funktional sicher durchgeführt werden kann.

Die Aufgabe wird für das eingangs genannte Verfahren dadurch gelöst, dass vom ersten Kommunikationsteilnehmer die dritte Adresskennung ermittelt wird, im ersten Kommunikationsteilnehmer mit Hilfe einer Rechenvorschrift, welche auf einen eindeutigen Wert angewendet wird, eine Kennung erzeugt wird, und diese Kennung dem ersten Datenanbieter mitgeteilt wird, der erste Datenverbraucher den eindeutigen Wert in einem ersten Anfrage-Telegramm an den zweiten Datenanbieter sendet, der zweite Datenanbieter mit einem ersten Antwort-Telegramm antwortet, in dem erste sicherheitsgerichtete Daten und die dritte Adresskennung enthalten sind, wobei im ersten Datenverbraucher geprüft wird, ob das erste Antwort-Telegramm die dritte Adresskennung enthält, und für den Fall, dass diese Prüfung positiv ausfällt, werden die ersten sicherheitsgerichteten Daten akzeptiert und ansonsten verworfen, wodurch die erste unidirektionale Verbindung funktional abgesichert ist, mit Hilfe der Rechenvorschrift im zweiten Kommunikationsteilnehmer ebenfalls die Kennung erzeugt wird, und die Kennung zur funktionalen Absicherung der zweiten unidirektionalen Verbindung zwischen dem ersten Datenanbieter und den zweiten Datenverbraucher genutzt wird.

Erfindungsgemäß wird vorgeschlagen eine Abbildung zu definieren, die einer Consumer-ID jeder bidirektionalen Verbindung einer Provider-ID desselben Endpunktes zuordnet, und diese Abbildung den beiden Endpunkten a priori bekannt zu machen. Beispielsweise könnte diese Abbildung aus dem Einerkomplement oder alternativ aus dem Zweierkomplement bestehen. Die Verbindung zwischen dem Datenanbieter und den Datenverbraucher wird dabei aufgebaut wie oben beschrieben. Der Datenverbraucher erhält die Adresskennung vom Datenanbieter beispielsweise über einen zusätzlichen Seitenkanal. Nach dem Verbindungsaufbau kann die Kennung vom Datenanbieter sicher geprüft werden.

Der Aufbau der Gegenrichtung zwischen dem weiteren Datenanbieter und dem weiteren Datenverbraucher war nach dem Stand der Technik nicht ohne weiteres möglich, da der weitere Datenverbraucher die Kennung vom weiteren Datenanbieter nicht kennt. Die bereits in einer Richtung bestehende erste unidirektionale Verbindung kann für den Austausch dieser Kennung nicht verwendet werden, da dafür genau die umgekehrte Richtung benötigt werden würde. Erfindungsgemäß bedeutet das nun, dass beispielsweise die Kennung des Verbrauchers stets dem Einerkomplement der Kennung des Anbieters entspricht, da die Kennung des weiteren Verbrauchers dem weiteren Datenanbieter beim Verbindungsaufbau mitgeteilt wird, und diese Information auch an eine Safety-Anwendung weitergegebenen werden kann, kann die Kennung des weiteren Datenanbieters im Gegenüber zur Laufzeit berechnet werden, und anschließend beim Aufbau der Verbindung zwischen dem weiteren Datenverbraucher und dem weiteren Datenanbieter für einen funktional sicheren Verbindungsaufbau verwendet werden.

Mit Vorteil wird daher verfahrensgemäß der zweite Datenverbraucher ein zweites Anfrage-Telegramm an den ersten Datenanbieter senden, der erste Datenanbieter mit einem zweiten Antwort-Telegramm antworten, in dem zweite sicherheitsgerichtete Daten und die nach der Rechenvorschrift berechnete Kennung enthalten sind, wobei im zweiten Daten-Verbraucher geprüft wird, ob das zweite Antwort-Telegramm die Kennung enthält, und für den Fall, dass diese Prüfung positiv ausfällt, werden die zweiten sicherheitsgerichteten Daten akzeptiert und ansonsten verworfen.

Für eine praktische Codeimplementierung ist es später von Vorteil, wenn der ersten Datenanbieter mit einer zweiten Adresskennung betrieben wird und diese zweite Adresskennung als der eindeutige Wert, verwendet wird. Durch die Prüfung der mitgelieferten Adresskennungen der jeweiligen Datenverbraucher wird letztendlich geprüft, ob die sicherheitsgerichteten Daten von einem richtigen Sender kommen oder z.B. aufgrund eines Netzwerkfehlers von einem falschen Sender kommen. Im allgemeinen Fall, erfolgt die Datenübertragung in beide Richtungen d.h. es findet eine funktional sichere bidirektionale Datenübertragung statt.

Insbesondere im Hinblick auf den Einsatz von neuen Kommunikationsverfahren und neuen Datenstrukturen ist es verfahrensgemäß von Vorteil, wenn als Kommunikationssystem, ein System basierend auf OPC UA Client/Server-Mechanismen mit einer TCP/IP-Kommunikation oder ein System basierend auf OPC UA Pup/Sub-Mechanismen mit einer TCP/IP-Kommunikation ergänzt um die Mechanismen für ein Time Sensitive Network verwendet wird.

Das erfindungsgemäß beschriebene Verfahren kann mit besonderem Vorteil bei einer Safety Kommunikation über ein OPC UA Kommunikationssystem eingesetzt werden. Eine bidirektionale, vorzugsweise funktional sichere Verbindung besteht bei OPC UA Kommunikation nämlich intern aus zwei unidirektionalen, funktional sicheren Verbindungen. Jede unidirektionale Verbindung wird zwischen einem Provider (Datenanbieter) und einem Consumer (Datenverbraucher) aufgebaut. Insgesamt gibt es demnach also zwei Provider und zwei Consumer, genannt PI, CG, PG, CI für "Provider Initiator", "Consumer Gegenüber", "Provider Gegenüber" und "Consumer Initiator".

Die nach dem Stand der Technik bewährten Protokoll-Sicherheitsmechanismen (z.B. CRC Prüfung, Code Names, Monitoring Number, Watchdog Überwachung und SIL-Monitor (sichere Begrenzung der erkannten Fehler)) können zwar übernommen werden, reichen aber zukünftig nicht mehr aus. Vor dem Hintergrund von Industrie 4.0 ist außerdem die Unterstützung flexibler Anlagenstrukturen mit wechselnden Kommunikationspartnern von entscheidender Bedeutung. Mit einem Sicherheitsprotokoll für OPC UA kann jede beliebige Netztopologie unterstützt werden, wobei Verbindungen prinzipiell auch zur Laufzeit auf- und abgebaut werden können. Ein gegebenes Interface kann abwechselnd von verschiedenen Partnern genutzt werden. Davon profitieren z.B. modulare Maschinen wie Autonomes Guided Vehicles (AGV's) oder autonome mobile Roboter (AMR's), Werkzeugwechsler usw..

Anders als bei heutigen funktional sicheren Kommunikationsprotokollen müssen nicht mehr alle Teilnehmer schon bei der Projektierung gegenseitig bekannt gemacht werden. Dadurch wird es möglich, der Anlage, z.B. einen neuen mobilen Roboter hinzuzufügen, ohne alle feststehenden Maschinen neu parametrieren zu müssen. Mit OPC UA ist ein Objekt orientiertes Informationsmodel eingeführt worden und mit der erfindungsgemäßen funktional sicheren Verbindungsidentifizierung kann nun mit OPC UA eine sichere Controller-Controller-Kommunikation durchgeführt werden.

Daher wird mit Vorteil der erste Kommunikationsteilnehmer durch eine oder in einer autonomen Robotereinheit betrieben und der zweite Kommunikationsteilnehmer durch eine oder in einer Maschine betrieben, wobei nach einem Anfahren der Robotereinheit an die Maschine die Kommunikation aufgebaut wird. Dieses Verfahren wird dann vorteilhaft eingesetzt, wenn eine Menge von autonomen mobilen Robotern in einer Fabrikhalle zu verschiedenen Maschinen fahren müssen. Zu jedem Zeitpunkt kann sich nur ein Roboter an einer Maschine befinden. Befindet sich ein Roboter an einer Maschine, wird eine funktional sichere Verbindung zwischen Maschine und Roboter, z.B. über ein drahtloses Netz aufgebaut. Aber bevor Daten ausgetauscht werden, muss geprüft werden, ob der Roboter mit der richtigen Maschine und nicht z.B. mit einer benachbarten Maschine kommuniziert.

Für den Fall, dass ein maximaler Zahlen-Wert der zweiten Adresskennung eine in einem verwendeten Protokoll zur Verfügung stehende Wortbreite überschreitet, wird der erste Datenverbraucher die zweite Adresskennung in Teile aufteilen und die Teile mit Teil-Anfrage-Telegrammen an den zweiten Datenanbieter senden, und dieser die Teile zusammenfasst und daraus die zweite Adresskennung ermittelt, wobei nach feststehender zweiter Adresskennung der zweite Datenverbraucher ein Final-Anfrage-Telegramm sendet und dieses mit dem zweiten Antwort-Telegramm beantwortet wird, in dem die zweiten sicherheitsgerichteten Daten und die zweite Adresskennung enthalten sind.

Es kann vorkommen, dass eine Provider ID länger ist als eine Consumer ID. Eine eindeutige Berechnung der Provider ID aus der Consumer ID ist dann nicht mehr möglich. Deshalb wird hier auch vorgeschlagen, den Platz für die im Rahmen der vom Consumer abgesetzten Anfrage verwendeten "Monitoring Number" zu verwenden, um die zusätzlichen Bits der ID zu übertragen. Die aktuellen Werte der "Monitoring Number" können laut Spezifikation vom Consumer frei gewählt werden. Dies kann genutzt werden, um dem Gegenüber die Übertragung der ID des PI zu signalisieren, z.B. in dem die "Monitoring Number" auf Null gesetzt wird. Die Übertragung der ID kann dann in der Monitoring Number der folgenden Telegramme, oder im Feld "Consumer ID" erfolgen.

Bei einer Anordnung mit einem ersten Kommunikationsteilnehmer und einem zweiten Kommunikationsteilnehmer, welcher über ein Kommunikationssystem Daten austauschen, wobei der erste Kommunikationsteilnehmer einen ersten Datenverbraucher mit einer ersten Adresskennung und einen ersten Datenanbieter mit einer zweiten Adresskennung aufweist, der zweite Kommunikationsteilnehmer einen zweiten Datenanbieter mit einer dritten Adresskennung und einen zweiten Datenverbraucher aufweist, wobei Mittel vorhanden sind, um zwischen dem ersten Datenverbraucher und dem zweiten Datenanbieter einer erste unidirektionale Verbindung und zwischen dem ersten Datenanbieter und dem zweiten Datenverbraucher eine zweite unidirektionale Verbindung aufzubauen, wird eine folgende Lösung bereitgestellt.

Der erste Kommunikationsteilnehmer ist ausgestaltet, die dritte Adresskennung zu ermitteln, weiterhin weist der erste Kommunikationsteilnehmer eine Abbildungseinheit auf, welche ausgestaltet ist, mit Hilfe einer Rechenvorschrift, welche auf einen eindeutigen Wert angewendet wird, eine Kennung zu erzeugen, weiterhin ist die Abbildungseinheit ausgestaltet, die Kennung an den ersten Datenanbieter weiter zu geben, dabei ist der erste Datenverbraucher dazu ausgestaltet, den eindeutigen Wert in einem ersten Anfrage-Telegramm an den zweiten Datenanbieter zu senden, der zweite Datenanbieter ist ausgestaltet, auf das erste Anfrage-Telegramm mit einem ersten Antwort-Telegramm, in dem erste sicherheitsgerichtete Daten und die dritte Adresskennung enthalten sind, zu antworten, wobei der erste Datenverbraucher weiterhin Prüfmittel aufweist, welche ausgestaltet sind, zu prüfen, ob das erste Antwort-Telegramm die dritte Adresskennung enthält, und weiterhin ist das Prüfmittel ausgestaltet, für den Fall, dass diese Prüfung positiv ausfällt, die ersten sicherheitsgerichteten Daten für gültig zu erklären und ansonsten zu verwerfen, wodurch die erste unidirektionale Verbindung funktional abgesichert ist, der zweite Kommunikationsteilnehmer weist eine Rückabbildungseinheit auf, welche ausgestaltet ist, mit der Rechenvorschrift aus dem eindeutigen Wert die Kennung zurück zu gewinnen und diese an den zweiten Datenverbraucher zu übergeben, und der erste Datenanbieter und der zweite Datenanbieter sind ausgestaltet, mit der ihnen jetzt beidseitig bekannten Kennung die zweite unidirektionale Verbindung zwischen dem ersten Datenanbieter und den zweiten Datenverbraucher funktional abzusichern. Da beide Kommunikationsteilnehmer Kenntnis von der Rechenvorschrift haben, können die Kommunikationsteilnehmer unabhängig voneinander die Kennung für die funktionale Sicherheitsprüfung berechnen.

Die Anordnung sieht weiterhin vor, dass der zweite Datenverbraucher ausgestaltet ist, ein zweites Anfrage-Telegramm an den ersten Datenanbieter zu senden, der erste Datenanbieter ausgestaltet ist, mit einem zweiten Antwort-Telegramm zu antworten, in dem zweite sicherheitsgerichtete Daten und die Kennung enthalten sind, wobei der zweite Datenverbraucher Gegenprüfmittel aufweist, welche ausgestaltet sind, zu prüfen, ob das zweite Antwort-Telegramm die Kennung enthält, und für den Fall, dass diese Prüfung positiv ausfällt, werden die zweiten sicherheitsgerichteten Daten akzeptiert und ansonsten verworfen.

Insbesondere im Hinblick auf die Digitalisierung und die Realisierung der Industrie 4.0 innerhalb der Prozessautomatisierung ist es von Vorteil, wenn das Kommunikationssystem ausgestaltet ist, als ein System welches eine Controller-Controller-Kommunikation, basierend auf OPC UA Client/Server Mechanismen mit einer TCP/IP-Kommunikation aufweist oder wenn ein System eingesetzt wird, welches basiert auf OPC UA Pub/Sub-Mechanismen mit einer TCP/IP-Kommunikation ergänzt um die Mechanismen für ein Time Sensitive Network vorhanden ist.

Für das Ermitteln der dritten Adresskennung kann vorteilhafterweise entweder ein vom Kommunikationssystem unabhängiger Seitenkanal genutzt werden, welcher dabei ausgestaltet ist, die dritte Adresskennung für den ersten Datenverbraucher bereit zu stellen oder es wird in einer alternativen Ausgestaltung dafür gesorgt, dass die Anordnung ein Ermittlungsmittel aufweist, welches ausgestaltet ist, auf eine Konfigurationsdatenbank zuzugreifen und weiterhin umfasst der erste Kommunikationsteilnehmer Positionsermittlungsmittel, welche ausgestaltet sind die Positionsdaten des ersten Kommunikationsteilnehmer zu ermitteln, dabei ist das Ermittlungsmittel dazu ausgestaltet auf der Basis der Positionsdaten mit der Konfigurationsdatenbank die dritte Adresskennung zu ermitteln.

Mit Vorteil wird die Anordnung bei autonomen mobilen Robotereinheiten eingesetzt, eine autonome mobile Robotereinheit weist dann den ersten Kommunikationsteilnehmer auf und eine Maschine weist dann den zweiten Kommunikationsteilnehmer auf, wobei die Robotereinheit ausgestaltet ist die Maschine anzufahren und eine Kommunikation aufzubauen.

Zusammengefasst kann gesagt werden, dass nun mit Vorteil ein Verfahren und eine Anordnung zur Verfügung gestellt worden ist, bei welchem es möglich ist, eine funktional sichere Verbindungsidentifizierung zu realisieren, bei welchem es nicht mehr notwendig ist, dass ein Überwachungsmechanismus auf Seiten des Datenanbieters hinsichtlich der Kommunikationsbeziehungen durchgeführt werden muss. Mit diesem Verfahren und mit dieser Anordnung zur funktional sicheren Verbindungsidentifizierung erhält man eine "Beziehungs-flexible funktional sichere Kommunikation mit einer einseitigen Prüfung für einen zweiseitigen Datenaustausch".

Die Zeichnung zeigt mehrere Ausführungsbeispiele der Erfindung, dabei zeigt die
- FIG 1: ein Maschinen-Robotersystem, wobei die Roboter mit den Maschinen funktional sichere bidirektionale Verbindungen aufbauen,
- FIG 2: ein Maschine-Bedienpanel-System, wobei die Bedienpanel mit den Maschinen eine funktional sichere bidirektionale Verbindung aufbauen können,
- FIG 3: eine Anordnung ausgestaltet als eine Controller-Controller-Kommunikationseinrichtung,
- FIG 4: einen zeitlichen Ablauf von Anfrage-Telegrammen zwischen einem ersten und zweiten Kommunikationspartner in einer ersten Variante und
- FIG 5: einen zeitlichen Ablauf von Anfrage-Telegrammen zwischen einem ersten und zweiten Kommunikationsteilnehmer in einer zweiten Variante.

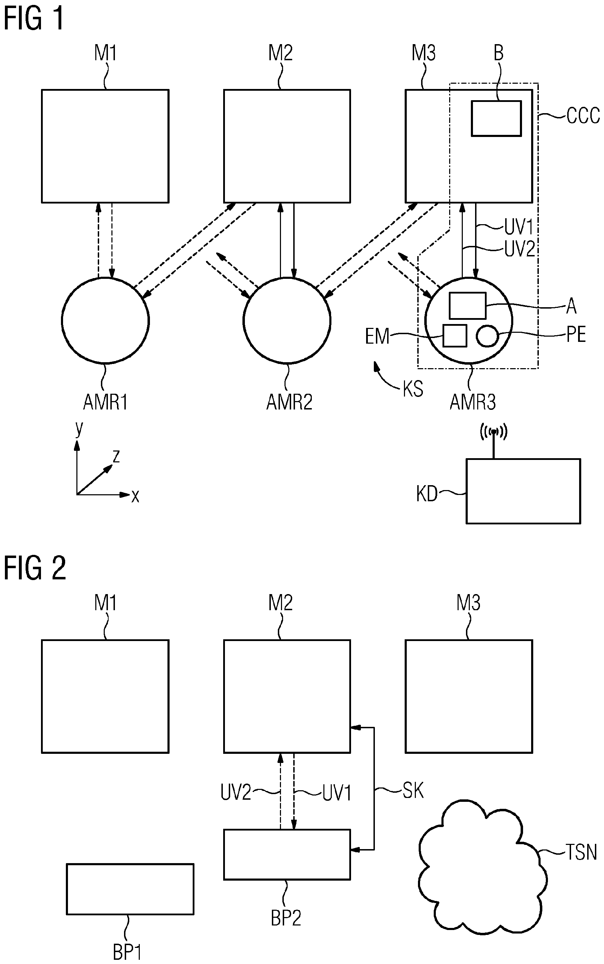

Gemäß FIG 1 sind eine erste Maschine M1, eine zweite Maschine M2 und eine dritte Maschine M3, welche mit einer ersten autonomen mobilen Robotereinheit AMR1, einer zweiten autonomen mobilen Robotereinheit AMR2 und einer dritten autonomen mobilen Robotereinheit AMR3 funktional sichere Verbindungen aufbauen können gezeigt. Funktional sicher bedeutet hier insbesondere, dass der Empfänger prüfen kann, ob die entgegengenommenen Daten vom richtigen Sender kommen, und nicht z.B. aufgrund eines Netzwerkfehlers oder einer Mobilfunkstörung von einem anderen Sender empfangen wurden. Im allgemeinen Fall erfolgt die Datenübertragung in beide Richtungen, d.h. es findet hier eine bidirektionale Datenübertragung statt. Die autonomen mobilen Robotereinheiten AMR1,AMR2,AMR3 befinden sich in einer Fabrikhalle mit einer Ausdehnung, welche über ein Koordinatensystem XYZ beschrieben werden kann. Gemäß FIG 1 wird als Kommunikationssystem KS beispielsweise ein Funkstandard mit einem übergestülpten PROFIsafe Protokoll verwendet. Auch könnte ein PROFINet Standard, bei welchem eine Kommunikation über Ethernet erfolgt, verwendet werden, dazu müssten die Roboter allerdings mechanisch an die Maschinen andocken.

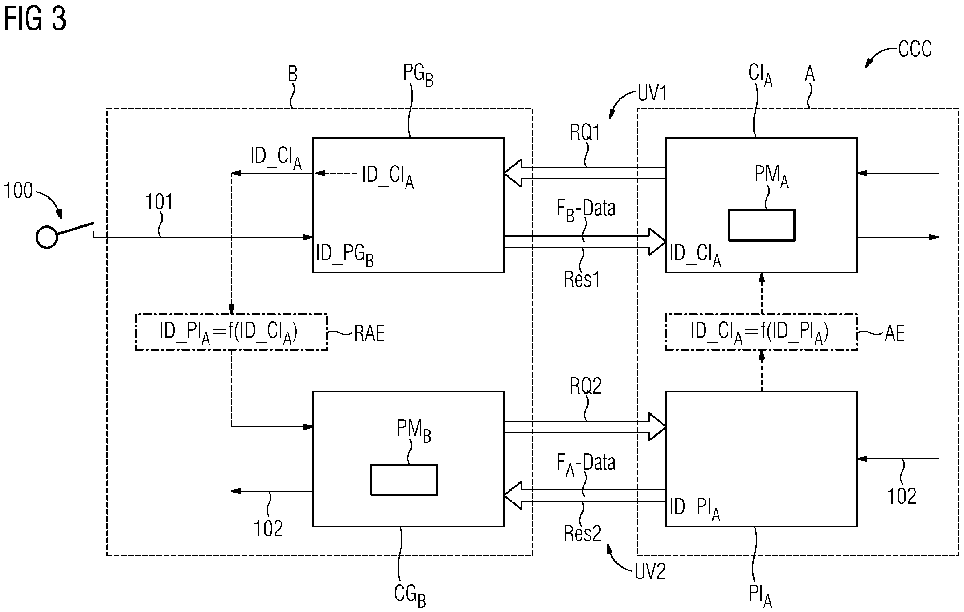

Der dritte autonome mobile Roboter AMR3 weist den ersten Kommunikationsteilnehmer A auf und die dritte Maschine M3 weist den zweiten Kommunikationsteilnehmer B auf. Die beiden Kommunikationsteilnehmer A,B bilden eine Anordnung CCC, welche mit FIG 3 näher beschrieben wird.

Fährt der dritte autonome mobile Roboter AMR3 an die Maschine M3 baut er eine Verbindung über den ersten Kommunikationsteilnehmer A mit dem zweiten Kommunikationsteilnehmer B auf und er stellt somit eine erste unidirektionale Verbindung UV1 und eine zweite unidirektionale Verbindung UV2 her. Der dritte autonome mobile Roboter AMR3 weist zusätzlich ein Positionsermittlungsmittel PE auf, mit welchen er seine Positionsdaten X,Y,Z ermitteln kann. Zusätzlich weist der dritte autonome mobile Roboter AMR3 ein Ermittlungsmittel EM auf, welches ausgestaltet ist auf eine Konfigurationsdatenbank KD zuzugreifen, wobei das Ermittlungsmittel weiterhin dazu ausgestaltet ist, auf der Basis der Positionsdaten X,Y,Z mit der Konfigurationsdatenbank KD die dritte Adresskennung ID_PG_{B} zu ermitteln.

Gemäß FIG 2 ist ein weiteres Ausführungsbeispiel für einen funktional sicheren Verbindungsaufbau zwischen mobilen Geräten und Maschinen gezeigt. Die erste Maschine M1, die zweite Maschine M2 und die dritte Maschine M3 können über unterschiedliche Bedienpanel BP1,PB2 bedient werden. In diesem Fall hat sich ein zweites Bedienpanel PB2 an die zweite Maschine M2 angemeldet und baut über einen Seitenkanal SK eine erste sichere unidirektionale Verbindung UV1 und eine zweite sichere unidirektionale Verbindung UV2 auf. Als Kommunikationssystem KS wird ein Time Sensitive Network TSN genutzt.

Die FIG 3 zeigt eine Anordnung CCC zur Controller-Controller-Communication. Ein erster Kommunikationsteilnehmer A baut mit einem zweiten Kommunikationsteilnehmer B zwei unidirektionale funktional sichere Verbindungen UV1, UV2 auf. Der erste Kommunikationsteilnehmer A weist einen ersten Datenverbraucher CI_{A} mit einer ersten Adresskennung ID_CI_{A} und einen ersten Datenanbieter PI_{A} mit einer zweiten Adresskennung ID_PI_{A} auf. Der zweite Kommunikationsteilnehmer B weist einen zweiten Datenanbieter PG_{B} mit einer dritten Adresskennung ID_PG_{B} und einen zweiten Datenverbraucher CG_{B} auf.

Weiterhin sind Mittel vorhanden, um zwischen dem ersten Datenverbraucher CI_{A} und den zweiten Datenanbieter PG_{B} eine erste unidirektionale funktional sichere Verbindung UV1 und zwischen dem ersten Datenanbieter PI_{A} und dem zweiten Datenverbraucher CG_{B} eine zweite unidirektionale funktional sichere Verbindung UV2 aufzubauen.

Der erste Kommunikationsteilnehmer A ist ausgestaltet, die dritte Adresskennung ID_PG_{B} des zweiten Datenanbieters PG_{B} zu ermitteln. Der erste Kommunikationsteilnehmer A weist eine Abbildungseinheit AE auf, welche ausgestaltet ist, mit Hilfe einer Rechenvorschrift f, welche auf die zweite Adresskennung ID_PI_{A} angewendet wird und damit die erste Adresskennung ID_CI_{A} erzeugt wird, weiterhin ist die Abbildungseinheit AE ausgestaltet, die zweite Adresskennung ID_PI_{A} an den ersten Datenanbieter PI_{A} weiter zu leiten. Der erste Datenverbraucher CI_{A} ist dazu ausgestaltet, die zweite Adresskennung ID_PI_{A} in einem ersten Anfrage-Telegramm RQ1 an den zweiten Datenanbieter PG_{B} zu senden. Der zweite Datenanbieter PG_{B} ist ausgestaltet, auf das erste Anfrage-Telegramm RQ1 mit einem ersten Antwort-Telegramm Res1 zu antworten. In dem ersten Antwort-Telegramm Res1 sind erste sicherheitsgerichtete Daten F_{B}-Data und die dritte Adresskennung ID_PG_{B} enthalten. Der erste Datenverbraucher CI_{A} weist Prüfmittel PM_{A} auf. Diese Prüfmittel PM_{A} sind ausgestaltet, zu prüfen, ob das erste Antwort-Telegramm Res1 die dritte Adresskennung ID_PG_{B} enthält. Diese Prüfung kann das Prüfmittel PM_{A} machen, weil der erste Kommunikationsteilnehmer A in einen früheren Schritt sich über einen Seitenkanal SK die dritte Adresskennung ID_PG_{B} geholt hat. Weiterhin ist das Prüfmittel PM_{A} ausgestaltet, für den Fall, dass diese Prüfung positiv ausfällt, die ersten sicherheitsgerichteten Daten F_{B}-Data für gültig zu erklären und ansonsten zu verwerfen, wodurch die erste unidirektionale Verbindung UV1 funktional abgesichert ist.

Der zweite Kommunikationsteilnehmer B weist eine Rückabbildungseinheit RAE auf, welche ausgestaltet ist, mit der Rechenvorschrift f aus der ersten Adresskennung ID_CI_{A} die zweite Adresskennung ID_PI_{A} zurück zu gewinnen und diese an den zweiten Datenverbraucher CG_{B} für eine spätere Anfrage zu übergeben.

Nun sind der erste Datenanbieter PI_{A} und der zweite Datenverbraucher CG_{B} ausgestaltet mit der ihnen jetzt beidseitig bekannten zweiten Adresskennung ID_PI_{A} die zweite unidirektionale Verbindung UV2 zwischen dem ersten Datenanbieter PI_{A} und den zweiten Datenverbraucher CG_{B} funktional abzusichern. Dazu weist im Wesentlichen der zweite Datenverbraucher CG_{B} ein Gegen-Prüfmittel PM_{B} auf, welches ausgestaltet ist, zu prüfen, ob das zweite Antwort-Telegramm Res2 die zweite Adresskennung ID_PI_{A} enthält, und für den Fall, dass diese Prüfung positiv ausfällt, werden die zweiten sicherheitsgerichteten Daten F_{A}-Data akzeptiert und ansonsten verworfen.

Als sicherheitsgerichtete Daten könnte beispielsweise das Datensignal eines Not-Aus-Schalters 100 weiter gereicht werden. Ein Not-Halt-Befehl 101 wird als ein funktional sicheres Datum F_{B}-Data über die erste unidirektionale Verbindung UV1 an den ersten Kommunikationsteilnehmer A weitergeleitet. Auch könnten sicherheitsgerichtete Daten ein Bereitschaftssignal 102 eines Roboters sein. Diese würden dann über die zweite unidirektionale Verbindung UV2 von den ersten Kommunikationsteilnehmer A an den zweiten Kommunikationsteilnehmer B weitergeleitet.

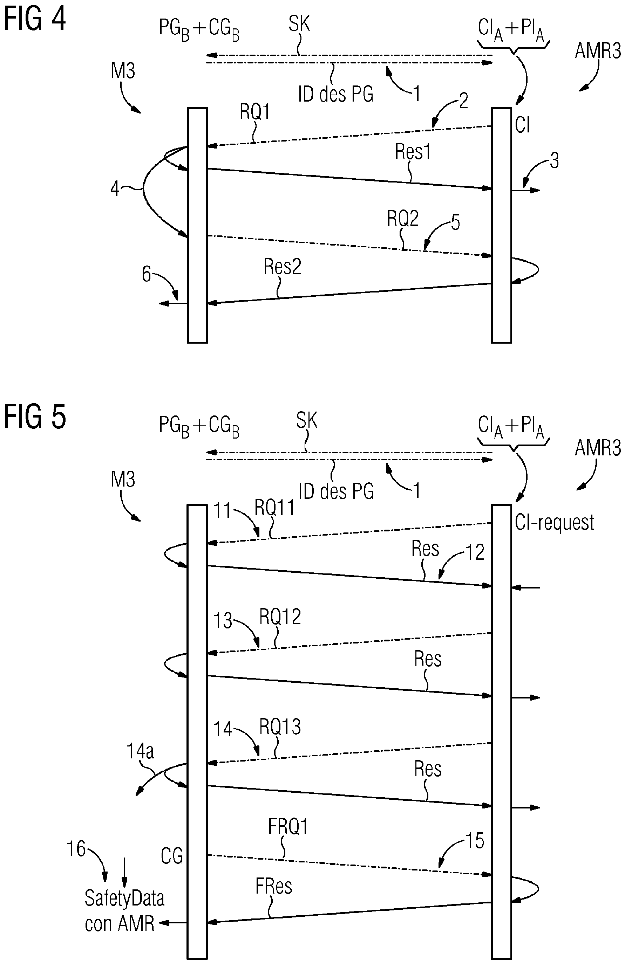

Die FIG 4 zeigt einen zeitlichen Ablauf von Anfrage-Telegrammen RQ1 bzw. Antwort-Telegrammen Res1. Auf der rechten Seite ist im Prinzip der erste Kommunikationsteilnehmer A in Form einer autonomen mobilen Robotereinheit AMR3 dargestellt. Der erste Kommunikationsteilnehmer A weist den ersten Datenverbraucher CI_{A} und den ersten Datenanbieter PI_{A} auf. Bei dem Verfahren zur funktional sicheren Verbindungsidentifizierung wird in einem ersten Schritt 1 vom ersten Kommunikationsteilnehmer A die dritte Adresskennung ID_PG_{B}, beispielsweise über einen Seitenkanal SK ermittelt. Nun ist die dritte Adresskennung ID_PG_{B} dem ersten Kommunikationsteilnehmer A bekannt. In einem zweiten Schritt 2 wird in dem ersten Kommunikationsteilnehmer A mit Hilfe der Rechenvorschrift f die erste Adresskennung ID_CI_{A} berechnet und diese erste Adresskennung ID_CI_{A} wird in einem ersten Anfrage-Telegramm RQ1 an den zweiten Datenanbieter PG_{B} gesendet. Der zweite Datenanbieter PG_{B} antwortet mit einem ersten Antwort-Telegramm Res1, in dem erste sicherheitsgerichtete Daten F_{B}-Data und die dritte Adresskennung ID_PG_{B} enthalten sind. In einem dritten Schritt 3 wird in dem ersten Kommunikationsteilnehmer A bzw. in dem ersten Datenverbraucher CI_{A} geprüft, ob das erste Antwort-Telegramm Res1 die dritte Adresskennung ID_PG_{B} enthält und für den Fall, dass diese Prüfung positiv ausfällt, werden die ersten sicherheitsgerichteten Daten F_{B}-Data akzeptiert und ansonsten verworfen.

In einem vierten Schritt 4 wird mit Hilfe der Rechenvorschrift f in dem zweiten Kommunikationsteilnehmer B ebenfalls die zweite Adresskennung ID_PI_{A} erzeugt und an den zweiten Datenverbraucher CG_{B} weitergegeben. Dieser setzt nun in einem fünften SchrittS ein zweites Anfrage-Telegramm RQ2 an den ersten Datenanbieter PI_{A} ab. Der erste Datenanbieter PI_{A} antwortet mit einen zweiten Antwort-Telegramm Res2 in dem zweite sicherheitsgerichtete Daten F_{A}-Data und die zweite Adresskennung ID_PI_{A} enthalten sind.

In einem sechsten Schritt 6 wird dann geprüft, ob das zweite Antwort-Telegramm Res2 die zweite Adresskennung ID_PI_{A} enthält, und für den Fall, dass diese Prüfung positiv ausfällt, werden die zweiten sicherheitsgerichteten Daten F_{A}-Data akzeptiert und ansonsten verworfen.

Mit der FIG 5 ist ein alternativer zeitlicher Ablauf von Anfrage- und Antwort-Telegrammen dargestellt. Dieses Verfahren würde eingesetzt werden, wenn ein maximaler Wert der zweiten Adresskennung ID_PI_{A} eine in einem verwendeten Protokoll zur Verfügung stehende Wortbreite überschreitet. Dann würde der erste Datenverbraucher CI_{A} die zweite Adresskennung ID_PI_{A} in Teile part1,part2,part3 aufteilen und die Teile part1,part2, part3 mit Teil-Anfrage-Telegrammen RQ11,RQ12,RQ13 an den zweiten Datenanbieter PG_{B} senden. Die Teile part1,part2,part3 werden im zweiten Datenanbieter PG_{B} wieder zusammengesetzt und die zweite Adresskennung ID_PI_{A} wird ermittelt.

Demnach wird wiederum in einem Schritt 1 über einen Seitenkanal SK die dritte Adresskennung ID_PG_{B} ermittelt. In einem alternativen ersten Schritt 11 wird mittels eines ersten Teilanfrage-Telegramms RQ11 der erste Teil part1 übertragen. In einem alternativen zweiten Schritt 12 wird auf diese Übertragung mit einem Antwort-Telegramm Res geantwortet. In einem alternativen dritten Schritt 13 wird mit einem zweiten Teilanfrage-Telegramm RQ12 der zweite Teil part 2 übertragen. In einem alternativen vierten Schritt 14 wird mit einem dritten Teilanfrage-Telegramm RQ13 der dritte Teil part 3 übertragen. Nun wird in einem alternativen vierten Zwischenschritt 14a die Adresskennung aus den drei Teilen part1,part2,part3 zusammengesetzt und es wird die Rechenvorschrift f auf die zusammengesetzten Teile part1,part2,part3 angewendet. Nun wird ein finales Anfrage-Telegramm FRQ1 gesendet, worauf mit einem finalen Antwort-Telegramm FRES geantwortet wird. In diesem finalen Antwort-Telegramm FRES sind die sicherheitsgerichteten Daten F_{A}-Data und die zweite Adresskennung ID_PI_{A} vorhanden. Die zweite Adresskennung ID_PI_{A} ist zwar jetzt eine Adresse mit langer Wortbreitung, aber die Besonderheit bei dem eingesetzten Protokoll ist es, dass in den Antwort-Telegrammen mehr Platz vorgesehen ist als in den Anfrage-Telegrammen.

## Patentansprüche

1. Verfahren zur funktional sicheren Verbindungsidentifizierung bei einem zweiseitigen Datenaustausch von sicherheitsgerichteten Daten (F_{B}-Data, F_{A}-Data) zwischen zwei Kommunikationsteilnehmern (A,B) in einem Kommunikationssystem (KS), wobei
- in einem ersten Kommunikationsteilnehmer (A) ein erster Datenverbraucher (CI_{A}) mit einer ersten Adresskennung (ID_CI_{A}) und ein erster Datenanbieter (PI_{A}) betrieben wird,
- in einem zweiten Kommunikationsteilnehmer (B) ein zweiter Datenanbieter (PG_{B}) mit einer dritten Adresskennung (ID_PG_{B}) betrieben wird und zusätzlich ein zweiter Daten-Verbraucher (CG_{B}) betrieben wird, und
- zwischen dem ersten Datenverbraucher (CI_{A}) und dem zweiten Datenanbieter (PG_{B}) eine erste unidirektionale Verbindung (UV1) aufgebaut wird und
- zwischen dem ersten Datenanbieter (PI_{A}) und dem zweiten Datenverbraucher (CG_{B}) eine zweite unidirektionale Verbindung (UV2) aufgebaut wird,
**dadurch gekennzeichnet, dass**
- vom ersten Kommunikationsteilnehmer (A) die dritte Adresskennung (ID_PG_{B}) ermittelt wird,
- im ersten Kommunikationsteilnehmer (A) mit Hilfe einer Rechenvorschrift (f), welche auf einen eindeutigen Wert angewendet wird, eine Kennung erzeugt wird, und diese Kennung dem ersten Datenverbraucher (CI_{A}) mitgeteilt wird,
- der erste Datenverbraucher (CI_{A}) den eindeutigen Wert in einem ersten Anfrage-Telegramm (RQ1) an den zweiten Datenanbieter (PG_{B}) sendet,
- der zweite Datenanbieter (PG_{B}) mit einem ersten Antwort-Telegramm (Res1) antwortet, in dem erste sicherheitsgerichtete Daten (F_{B}-Data) und die dritte Adresskennung (ID_PG_{B}) enthalten sind,
- wobei im ersten Datenverbraucher (CI_{A}) geprüft wird, ob das erste Antwort-Telegramm (Res1) die dritte Adresskennung (ID_PG_{B}) enthält, und für den Fall, dass diese Prüfung positiv ausfällt, werden die ersten sicherheitsgerichteten Daten (F_{B}-Data) akzeptiert und ansonsten verworfen, wodurch die erste unidirektionale Verbindung (UV1) funktional abgesichert ist,
- mit Hilfe der Rechenvorschrift (f) im zweiten Kommunikationsteilnehmer (B) ebenfalls die Kennung erzeugt wird,
- und die Kennung zur funktionalen Absicherung der zweiten unidirektionalen Verbindung (UV2) zwischen dem ersten Datenanbieter (PI_{A}) und dem zweiten Datenverbraucher (CG_{B}) genutzt wird.

2. Verfahren nach Anspruch 1, wobei
- der zweite Datenverbraucher (CG_{B}) ein zweites Anfrage-Telegramm (RQ2) an den ersten Datenanbieter (PI_{A}) sendet,
- der erste Datenanbieter (PI_{A}) mit einem zweiten Antwort-Telegramm (Res2) antwortet, in dem zweite sicherheitsgerichtete Daten (F_{A}-Data) und die Kennung enthalten sind,
wobei im zweiten Datenverbraucher (CG_{B}) geprüft wird, ob das zweite Antwort-Telegramm (Res2) die Kennung enthält, und für den Fall, dass diese Prüfung positiv ausfällt, werden die zweiten sicherheitsgerichteten Daten (F_{A}-Data) akzeptiert und ansonsten verworfen.

3. Verfahren nach Anspruch 2, wobei der erste Datenanbieter (PI_{A}) mit einer zweiten Adresskennung (ID_PI_{A}) betrieben wird und diese als der eindeutige Wert verwendet wird.

4. Verfahren nach einem der Ansprüche 1 bis 3, wobei als Kommunikationssystem (KS) ein System basierend auf OPC UA Client/Server Mechanismen mit einer TCP/IP-Kommunikation oder ein System basierend auf OPC UA Pup/Sub Mechanismen mit einer TCP/IP-Kommunikation ergänzt um die Mechanismen für ein Time Sensitiv Network (TSN) verwendet wird.

5. Verfahren nach einem der Anspruch 1 bis 4, wobei die Ermittlung der dritten Adresskennung (ID_PG_{B}) über einen vom Kommunikationssystem (KS) unabhängigen Seitenkanal (SK) oder anhand einer Konfigurationsdatenbank (KD) unter zu Hilfenahmen von Positionsdaten (x,y,z) des ersten Kommunikationsteilnehmers (A) erfolgt.

6. Verfahren nach einem der Ansprüche 1 bis 5, wobei der erste Kommunikationsteilnehmer (A) durch einen oder in einer autonomen Robotereinheit (AMR1,AMR2,AMR3) betrieben wird und der zweite Kommunikationsteilnehmer (B) durch eine oder in einer Maschine (M1,M2,M3) betrieben wird, wobei nach einem Anfahren der Robotereinheit (AMR1,AMR2,AMR3) an die Maschine (M1,M2,M3) die Kommunikation aufgebaut wird.

7. Verfahren nach einem der Ansprüche 3 bis 6, wobei für den Fall, dass ein maximaler Zahlen-Wert der zweiten Adresskennung (ID_PI_{A}) eine in einem verwendeten Protokoll zur Verfügung stehende Wortbreite überschreitet, teilt der erste Datenverbraucher (CI_{A}) die zweite Adresskennung (ID_PI_{A}) in Teile (part1,part2,part3) auf und die Teile (part1,part2, part3) mit Teil-Anfrage-Telegrammen (RQ11, RQ12, RQ13) an den zweiten Datenanbieter (PG_{B}) sendet, und dieser die Teile (part1,
part2,part3) zusammensetzt und die zweite Adresskennung (ID_PI_{A}) ermittelt, wobei nach feststehender zweiten Adresskennung (ID_PI_{A}) der zweite Datenverbraucher (CG_{B}) ein Final-Anfrage-Telegramm (FRQ2) sendet und dieses wiederum mit dem zweiten Antwort-Telegramm (Res2) beantwortet wird, in dem die zweiten sicherheitsgerichteten Daten (F_{A}-Data) und die zweite Adresskennung (ID_PI_{A}) enthalten sind.

8. Anordnung (CCC) mit einem ersten Kommunikationsteilnehmer (A) und einem zweiten Kommunikationsteilnehmer (B), welche über ein Kommunikationssystem (KS) Daten austauschen,
wobei
- der erste Kommunikationsteilnehmer (A) einen ersten Datenverbraucher (CI_{A}) mit einer ersten Adresskennung (ID_CI_{A}) und einen ersten Datenanbieter (PI_{A}) mit einer zweiten Adresskennung (ID_PI_{A}) aufweist,
- der zweite Kommunikationsteilnehmer (B) einen zweiten Datenanbieter (PGB) mit einer dritten Adresskennung (ID_PG_{B}) und einen zweiten Datenverbraucher (CGB) aufweist, wobei Mittel vorhanden sind um
- zwischen dem ersten Datenverbraucher (CI_{A}) und dem zweiten Datenanbieter (PG_{B}) eine erste unidirektionale Verbindung (UV1) und
- zwischen dem ersten Datenanbieter (PIA) und dem zweiten Datenverbraucher (CGB) eine zweite unidirektionale Verbindung (UV2) aufzubauen,
**dadurch gekennzeichnet, dass**
- der erste Kommunikationsteilnehmer (A) ausgestaltet ist die dritte Adresskennung (ID_PG_{B}) zu ermitteln,
- der erste Kommunikationsteilnehmer (A) eine Abbildungseinheit (AE) aufweist, welche ausgestaltet ist mit Hilfe einer Rechenvorschrift (f), welche auf einen eindeutigen Wert angewendet wird, eine Kennung zu erzeugen,
- weiterhin ist die Abbildungseinheit (AE) ausgestaltet die Kennung an den ersten Datenverbraucher (CI_{A}) weiterzugeben,
- der erste Datenverbraucher (CI_{A}) ausgestaltet ist den eindeutigen Wert in einem ersten Anfrage-Telegramm (RQ1) an den zweiten Datenanbieter (PG_{B}) zu senden,
- der zweite Datenanbieter (PG_{B}) ausgestaltet ist auf das erste Anfrage-Telegramm (RQ1) mit einem ersten Antwort-Telegramm (Res1), in dem erste sicherheitsgerichtete Daten (F_{B}-Data) und die dritte Adresskennung (ID_PG_{B}) enthalten sind, zu antworten,
- wobei der erste Datenverbraucher (CI_{A}) weiterhin Prüfmittel (PM_{A}) aufweist, welche ausgestaltet sind zu prüfen, ob das erste Antwort-Telegramm (Res1) die dritte Adresskennung (ID_PG_{B}) enthält, und weiterhin ist das Prüfmittel(PMA) ausgestaltet, für den Fall, dass diese Prüfung positiv ausfällt, die ersten sicherheitsgerichteten Daten (F_{B}-Data) für gültig zu erklären und ansonsten zu verwerfen, wodurch die erste unidirektionale Verbindung (UV1) funktional abgesichert ist,
- der zweite Kommunikationsteilnehmer (B) eine RückAbbildungseinheit (RAE) aufweist, welche ausgestaltet ist, mit der Rechenvorschrift (R1) aus dem eindeutigen Wert die Kennung zurück zu gewinnen und diese an den zweiten Datenverbraucher (CG_{B}) zu übergeben,
- und der erste Datenanbieter (PI_{A}) und der zweite Datenverbraucher (CGB) ausgestaltet sind mit der ihnen jetzt beidseitig bekannten Kennung die zweite unidirektionale Verbindung (UV2) zwischen dem ersten Datenanbieter (PIA) und dem zweiten Datenverbraucher (CG_{B}) funktional abzusichern.

9. Anordnung (CCC) nach Anspruch 8, wobei
- der zweite Datenverbraucher (CG_{B}) ausgestaltet ist ein zweites Anfrage-Telegramm (RQ2) an den ersten Datenanbieter (PI_{A}) zu senden,
- der erste Datenanbieter (PI_{A}) ausgestaltet ist mit einem zweiten Antwort-Telegramm (Res2) zu antworten, in dem zweite sicherheitsgerichtete Daten (F_{A}-Data) und die Kennung enthalten sind,
wobei der zweite Datenverbraucher (CG_{B}) Gegen-Prüfmittel (PM_{B}) aufweist, welche ausgestaltet sind zu prüfen, ob das zweite Antwort-Telegramm (Res2) die Kennung enthält, und für den Fall, dass diese Prüfung positiv ausfällt, werden die zweiten sicherheitsgerichteten Daten (F_{A}-Data) akzeptiert und ansonsten verworfen.

10. Anordnung (CCC) nach Anspruch 8 oder 9, wobei als Kommunikationssystem (KS) ein System ausgestaltet als ein Controller-Controller-Kommunikationssystem basierend auf OPC UA Client/Server Mechanismen mit einer TCP/IP-Kommunikation oder ein System basierend auf OPC UA Pup/Sub Mechanismen mit einer TCP/IP-Kommunikation ergänzt um die Mechanismen für ein Time Sensitiv Network (TSN) vorhanden ist.

11. Anordnung (CCC) nach einem der Ansprüche 8 bis 10, aufweisend einen vom Kommunikationssystem (KS) unabhängigen Seitenkanal (SK), welcher ausgestaltet ist die dritte Adresskennung (ID_PG_{B}) für den ersten Datenverbraucher (CI_{A}) bereitzustellen.

12. Anordnung (CCC) nach einem der Ansprüche 8 bis 11, aufweisend ein Ermittlungsmittel (EM), welches ausgestaltet ist auf eine Konfigurationsdatenbank (KD) zuzugreifen und weiterhin umfasst der erste Kommunikationsteilnehmer (A) Positionsermittlungsmittel (PE), welche ausgestaltet sind, die Positionsdaten (x,y,z) des ersten Kommunikationsteilnehmers (A) zu ermitteln, dabei ist das Ermittlungsmittel (EM) dazu ausgestaltet, auf der Basis der Positionsdaten (x,y,z) mit der Konfigurationsdatenbank (KD) die dritte Adresskennung (ID_PG_{B}) zu ermitteln.

13. Anordnung (CCC) nach einem der Ansprüche 8 bis 12, wobei eine autonome mobile Robotereinheit (AMR1,AMR2,AMR3) den ersten Kommunikationsteilnehmer (A) aufweist und eine Maschine (M1,M2,M3) den zweiten Kommunikationsteilnehmer (B) aufweist, wobei die Robotereinheit (AMR1,AMR2,AMR3) ausgestaltet ist, die Maschine (M1,M2,M3) anzufahren und eine Kommunikation aufzubauen.
